(19) Europäisches Patentamt
European Patent Office
Office européen des brevets

(11) **EP 1 873 203 B1**

(12) **EUROPEAN PATENT SPECIFICATION**

(45) Date of publication and mention of the grant of the patent:
**28.10.2015 Bulletin 2015/44**

(51) Int Cl.:
**C08L 23/14** (2006.01)     *C08L 23/16* (2006.01)
*C08L 23/08* (2006.01)

(21) Application number: **06013650.4**

(22) Date of filing: **30.06.2006**

(54) **POLYOLEFIN COMPOSITION SUITABLE FOR BOTTLES WITH HIGH-IMPACT STRENGTH AND TRANSPARENCY**

POLYOLEFINZUSAMMENSETZUNG ZUR HERSTELLUNG VON FLASCHEN MIT SCHLAGFESTIGKEIT UND TRANPARENZ

COMPOSITION À BASE DE POLYOLÉFINS POUR BOUTEILLES PRÉSENTANT RÉSISTANCE AU CHOC ET TRANSPARENCE.

(84) Designated Contracting States:
**AT BE BG CH CY CZ DE DK EE ES FI FR GB GR HU IE IS IT LI LT LU LV MC NL PL PT RO SE SI SK TR**

(43) Date of publication of application:
**02.01.2008 Bulletin 2008/01**

(73) Proprietor: **Borealis Technology Oy**
**06101 Porvoo (FI)**

(72) Inventors:
• **Myhre, Eline**
**3942 Porsgrunn (NO)**
• **Wachholder, Max**
**4320 Mauthausen (AT)**
• **Grein, Christelle**
**4020 Linz (AT)**
• **Bernreitner, Klaus**
**4010 Linz (AT)**
• **Jääskeläinen, Pirjo**
**06150 Porvoo (FI)**

(74) Representative: **Grünecker Patent- und Rechtsanwälte**
**PartG mbB**
**Leopoldstraße 4**
**80802 München (DE)**

(56) References cited:
**EP-A1- 0 557 953     EP-A2- 0 373 660**
**WO-A-02/44272**

## Description

The present invention concerns a polymer composition comprising polyolefins which enables the preparation of molded articles having an improved balance of properties, in particular mechanical properties and transparency. Preferred examples of molded articles are bottles. The present invention furthermore concerns a process for preparing such a polymer composition and the use of such a polymer composition for preparing molded articles.

## Prior art

Polymer compositions, in particular polyolefin compositions comprising propylene polymers are used over a broad variety of fields of application due to their properties. Such polymer compositions can be used in order to prepare molded articles with satisfactory mechanical properties. Examples thereof are consumer articles, such as plastic containers, household or office articles etc. These polymer compositions, however, often suffer from shortcomings with respect to a balance of properties, in particular a balance of optical and mechanical properties, such as high transparency and low haze, low temperature toughness, stiffness etc. Conventional polymer compositions as known do not enable a provision of a fully satisfactory balance of these properties, which are often conflicting properties, as for example an improvement with respect to impact properties in most cases leads to a decrease in optical properties.

WO 03/106553 A1 discloses propylene copolymer compositions comprising two propylene components. EP 0373660 A2 discloses propylene polymer compositions comprising a mixture of crystalline propylene polymer with an ethylene-propylene-rubber component. EP 06037238 A2 discloses polypropylene compositions comprising a propylene homopolymer or a copolymer of propylene with other olefins in combination with an elastomeric copolymer being an ethylene polymer with a comonomer having four or more carbon atoms. US 3517086 discloses a blend of polypropylene, polyethylene and an ethylene-propylene rubber. The compositions as disclosed are mechanical blends of the individual components and examples of the polypropylene component employed in this document are crystalline propylene homopolymers. US 3998911 discloses a polypropylene composition comprising a polypropylene, a polyethylene and an ethylene-propylene rubber. The polypropylene component disclosed is a homopolymer.

GB 1156813 describes propylene polymer blends, comprising a propylene polymer, an ethylene-propylene-copolymer and a further ethylene polymer. The blends as disclosed in this document are mechanical blends of the individual polymeric components. WO 02/44272 A1 describes a polyolefin composition comprising a propylene polymer, a propylene-$\alpha$-olefin rubber copolymer and an ethylene polymer. EP 0557953 A1 discloses a polyolefin composition comprising a copolymer of propylene and ethylene, a polyethylene and a further copolymer of ethylene and propylene.

The polymer compositions as disclosed in these prior art documents, however, still do not provide a fully sufficient and satisfactory composition for preparing molded articles having a desired balance of properties, as outlined above.

## Object of the present invention

Accordingly, it is the object of the present invention to provide a polymer composition enabling the preparation of molded articles having a good balance of properties, in particular a high satisfactory balance of mechanical and optical properties, in particular impact properties and transparency, and in embodiments, the present invention aims at increasing the impact properties without sacrificing the optical properties, such as transparency. In further embodiments, the present invention, in particular, aims at improving the impact strength at low temperatures while maintaining a highly sufficient degree of optical properties.

## Brief description of the present invention

The above object has been solved with the polymer composition as identified in claim 1. Preferred embodiments thereof are disclosed in claims 2 to 12 as well as the following specification. The present invention furthermore provides a molded article as defined in claims 13 to 15 and 18. Preferred embodiments are again defined in the respective sub-claims. Finally, the present invention provides a process for preparing a polymer composition in accordance with the present invention as defined in claim 16 and the use of the polymer composition in accordance with the present invention as defined in claim 17. Preferred embodiments of the process are disclosed in the following specification. Preferred embodiments of the use aspect of the present invention are disclosed in the specification.

## Detailed description of the present invention

As identified in claim 1, the present invention provides a polymer composition, comprising the three components A) to C) as defined in claim 1. Components A) and B) are, in accordance with the definition of the present invention, present in the form of a heterophasic composition comprising component A) as matrix component and component B) as dispersed phase. This heterophasic composition will also be designated heterophasic propylene copolymer in the following description.

Component A)

Component A) is a propylene copolymer, comprising, in addition to the main monomer propylene, a comonomer selected from ethylene and $\alpha$-olefins. $\alpha$-olefins as envisaged by the present invention are, in particular, $\alpha$-olefins having from 4 to 20 carbon atoms, more preferably from 4 to 12 carbon atoms, and in particular from 4 to 10 carbon atoms. The propylene copolymer A) may comprise one comonomer or two or more comonomers, although the presence of only one comonomer is preferred. The preferred comonomers are ethylene and $\alpha$-olefins having from 4 to 10 carbon atoms, with ethylene being in particular preferred.

The propylene copolymer A) comprises from more than 0 to 1 wt% of comonomer, preferably from 0.25 to 0.95 wt%. In comparison with the prior art, this comonomer content is a very low comonomer content which, surprisingly, has been found as being highly advantageous with respect to the overall properties of the polymer composition in accordance with the present invention. The propylene copolymer A) preferably displays an $MFR_2$ value (determined as identified further below) of from 0.1 to 5 g/10 min, more preferably 0.5 to 4 g/10 min.

Rubber component B)

The polymer composition in accordance with the present invention furthermore comprises a rubber component. In the broadest sense of the present invention, any rubber component may be employed, including in particular rubber components based on olefin copolymers, such as ethylene propylene-copolymers as well as ethylene-propylene-diene-copolymers. Preferred in accordance with the present invention, the rubber component B) is an elastomeric ethylene-propylene copolymer (EPR).

Such a preferred elastomeric ethylene-propylene copolymer comprises propylene in an amount of from 40 to 80 wt%, more preferably from 50 to 70 wt% and more preferably even from 60 to 70 wt%.

The component B) preferably displays an IV value (determined as identified further below) of from 1 to 3 dl/g, more preferably of from 1 to 2.5 dl/g, and in particular from 1.5 to 2 dl/g.

Heterophasic composition

Components A) and B) as defined in claim 1 and as described above are present in the polymer composition in accordance with the present invention in the form of a heterophasic composition.

The term "heterophasic composition" defines a composition comprising a matrix phase and a dispersed phase, this embodiment can also be described as a heterophasic propylene copolymer, comprising, as identified above, a matrix phase and a dispersed phase. The matrix phase usually comprises from about 75 to 95 wt% of the heterophasic composition while the dispersed phase amounts to 5 to 25 wt% of the heterophasic composition. Preferably the dispersed phase, i.e. component B), is present in an amount of from 7 to 15 wt%, based on the total weight of the heterophasic composition, more preferably from 8 to 12 wt% and in particular 9 to 11.5 wt%.

The heterophasic composition comprising components A) and B) may be prepared in any known manner, including sequential polymerization reactions, wherein the components are blended together *in situ* during their preparation process, blending processes comprising mixing and melt blending processes as well as combinations of *in situ* blending and mechanical blending. Sequential polymerization reactions are, however, preferred for preparing the heterophasic composition to be employed in accordance with the present invention.

The modality of the matrix phase, i.e. component A), with respect to molecular weight distribution as well as with respect to comonomer content and/or comonomer type is not critical. The matrix phase in accordance with the present invention accordingly may be unimodal or multimodal, including bimodal, with respect to molecular weight distribution and/or comonomer content and/or comonomer type. The heterophasic composition to be used in accordance with the present invention may, thus, comprise a matrix phase comprising only one propylene copolymer A) or the matrix phase may comprise more than one propylene copolymer A), such as 2, 3 or 4 different propylene copolymers. A bimodal matrix phase may be described as a matrix comprising components (i) and (ii), which differ with respect to at least one property as identified above, i.e. molecular weight distribution, comonomer content and/or comonomer type.

Also, the rubber component B), i.e. the dispersed phase, may comprise one suitable rubber component or more than one, such as two, three or four rubber components. In this respect again, unimodal or multimodal, including bimodal embodiments can be realized, differing for example with respect to the molecular weight distribution and/or the chemical composition of the rubber component, such as propylene content etc.

With respect to the overall polymer composition, the heterophasic composition comprising components A) and B) preferably is contained in the polymer composition of the present invention in an amount of at least 80 wt% (based on the total weight of the polymer composition comprising components A) to C)). In preferred embodiments, the heterophasic composition is contained in the polymer composition in accordance with the present invention in amounts of at least 85 wt% and more preferably at least 87 wt% or 88 wt%. Suitable upper limits for the content of the heterophasic composition are 99.8 wt% and in another embodiments 95 wt% and in particular about 94 wt%. Accordingly, the present invention contemplates contents of the heterophasic composition in the polymer composition of the present invention in a range of from 80 to 99.8 wt%, and in preferred embodiments from 85 to 95 wt%, and in particular from 87 to 94 wt% or 88 to 92 wt%.

As outlined above, the heterophasic composition to be employed in accordance with the present invention may be prepared in any suitable manner known to the skilled person in the art, including mechanical blending processes as well as, preferably, sequential polymerization processes. In this respect, it is also possible to prepare the matrix phase by suitable sequential polymerization processes, while the dispersed phase then can either be introduced by blending processes or by a further polymerization carried out in the presence of the already polymerized matrix phase.

According to a preferred embodiment of the present invention, the heterophasic composition is a reactor made heterophasic composition. Reactor made heterophasic compositions defines herein a reaction product which is obtained from a polymerization reaction sequentially polymerizing the different components of the heterophasic composition. In this respect, any polymerization method, including solution, slurry and bulk polymerization or gas phase polymerization can be used, in any desired order. Bulk polymerization defines in the present application a polymerization in a reaction medium comprising at least 60 wt% monomer.

In the following, a preferred process for preparing first the matrix phase of the heterophasic composition is described, followed by a description of a further preferred embodiment also including the preparation of the dispersed phase.

When the matrix is unimodal with respect to the molecular weight distribution and comonomer distribution, it may be prepared in a single stage process e.g. as slurry or gas phase process in a slurry or gas phase reactor. Preferably, the unimodal matrix is produced in a multistage process using at each stage process conditions as illustrated further below.

The matrix phase of the heterophasic composition to be used in accordance with the present invention, comprises preferably components (i) and (ii) as defined above may be prepared by polymerizing, in a slurry reactor, for example a loop reactor, propylene monomers optionally together with one or more comonomers, in the presence of a polymerization catalyst to produce component (i) of the matrix phase of the heterophasic composition. This component (i) is then transferred to a subsequent gas phase reactor, wherein in the gas phase reactor propylene monomers are reacted in the presence of suitably selected comonomers in order to produce component (ii) in the presence of the reaction product of the first step. This reaction sequence provides a reactor blend of components (i) and (ii) constituting the matrix phase of the heterophasic composition. It is of course possible by the present invention that the first reaction is carried out in a gas phase reactor while the second polymerization reaction is carried out in a slurry reactor, for example a loop reactor. It is furthermore also possible to reverse the order of producing components (i) and (ii), which has been described above in the order of first producing component (i) and then producing component (ii). The above-discussed process, comprising at least two polymerization steps, is advantageous in view of the fact that it provides easily controllable reaction steps enabling the preparation of a desired reactor blend of the matrix phase of the heterophasic composition. The polymerization steps may be adjusted, for example by appropriately selecting monomer feed, comonomer feed, hydrogen feed, temperature and pressure in order to suitably adjust the properties of the polymerization products obtained. It is in particular possible to obtain the preferred multimodality, preferably the bimodality, of the matrix phase of the heterophasic composition, with respect to the ethylene distribution as well as with respect to the molecular weights and $MFR_2$ values of the matrix phase components during said multistage polymerization procedures.

Such a process can be carried out using any suitable catalyst for the preparation of propylene monomers, including. Preferably, the process as discussed above is carried out using a Ziegler-Natta catalyst, in particular a high yield Ziegler-Natta catalyst (so-called fourth and fifth generation type to differentiate from low yield, so called second generation Ziegler-Natta catalysts). A suitable Ziegler-Natta catalyst to be employed in accordance with the present invention comprises a catalyst component, a co-catalyst component and at least one electron donor (internal and/or external electron donor, preferably at least one external donor). Preferably, the catalyst component is a Ti-Mg-based catalyst component and typically the co-catalyst is an Al-alkyl based compound. Suitable catalysts are in particular disclosed in US 5,234,879, WO 92/19653, WO 92/19658 and WO 99/33843, incorporated herein by reference.

A suitable Ziegler-Natta catalyst to be employed in accordance with the present invention comprises a catalyst component, a co-catalyst component and at least one electron donor (internal and/or external electron donor, preferably at least one external donor). Preferably, the catalyst component is a Ti-Mg based catalyst component and typically the co-catalyst is an Al-alkyl based compound. Suitable catalysts are in particular disclosed in US 5,234,879, WO 92/19653, WO 92/19658 and WO 99/33843, incorporated herein by reference.

Preferred external donors are the known silane-based donors, such as dicyclopentyl dimethoxy silane or cyclohexyl methyldimethoxy silane.

One embodiment of a process as discussed above is a loop-gas phase process, such as developed by Borealis, known as Borstar® technology, described for example in EP 0887379 A1 and WO 92/12182, incorporated herein by reference.

With respect to the above-mentioned preferred slurry-gas phase process, the following general information can be provided with respect to the process conditions.

Temperature of from 40°C to 110°C, preferably between 60°C and 100°C, in particular between 80°C and 90°C, with a pressure in the range of from 20 to 80 bar, preferably 30 to 60 bar, with the option of adding hydrogen in order to control the molecular weight. The reaction product of the slurry polymerization, which preferably is carried out in a loop reactor, is then transferred to the subsequent gas phase reactor, wherein the temperature preferably is within the range of from 50°C to 130°C, more preferably 80°C to 100°C, at a pressure in the range of from 5 to 50 bar, preferably 15 to 35 bar, again with the option of adding hydrogen in order to control the molecular weight.

The residence time can vary in the reactor zones identified above. In embodiments, the residence time in the slurry reaction, for example the loop reactor, is in the range of from 0.5 to 5 hours, for example 0.5 to 2 hours, while the residence time in the gas phase reactor generally will be from 1 to 8 hours.

The properties of the matrix phase produced with the above-outlined process may be adjusted and controlled with the process conditions as known to the skilled person, for example by one or more of the following process parameters: temperature, hydrogen feed, comonomer feed, propylene feed, catalyst, type and amount of external donor, split between two or more components of a multimodal polymer.

In accordance with a further preferred embodiment of the present invention, the matrix phase produced in accordance with the preferred process discussed above is then transferred into a further reactor, preferably a gas phase reactor in order to polymerize an the rubber component (B), i.e. the dispersed phase, in the presence of the matrix phase.

This polymerization stage is carried out as a gas-phase polymerization in one or more gas-phase reactors. It is particularly preferred that this polymerization stage is carried out in one gas-phase reactor to which the matrix component is fed together with propylene, comonomer, and hydrogen as needed.

As mentioned earlier, the comonomer is at least one olefin selected from the group consisting of ethylene and $C_4$-$C_{10}$-$\alpha$-olefins, such as ethylene, butene, pentene, hexane and the like, and preferably ethylene.

The rubber component, typically an elastomeric propylene copolymer prepared in this stage will give the heterophasic propylene copolymer improved impact strength. The conditions for the copolymerization are within the limits of conventional ethylene-propylene rubber (EPM) production conditions such as they are disclosed e.g. In Encyclopedia of Polymer Science and Engineering, Second Edition, Vol. 6, pp. 545-558. A rubbery product is formed if the comonomer (preferably ethylene) content in the polymer lies within a certain range. Thus, preferably, ethylene and propylene are copolymerized into an elastomer in such a ratio that the amorphous part of the copolymer contains from 10 to 70% by weight of ethylene units.

It is desired that the elastomeric propylene copolymer prepared in this stage and thus also the overall heterophasic propylene copolymer should have a low amount of "rubber", i.e. that the XS value should be low in order not to adversely affect the targeted high modulus of the heterophasic propylene copolymer. On the other hand, the amount of rubber, expressed as the XS value, should not be too low, but sufficient to afford the polymer sufficient impact strength. Therefore, the XS of the ethylene-propylene impact copolymer should lie in the range of 5 to 15% by weight, preferably 8 to 12% by weight, based on the weight of the ethylene-propylene impact copolymer.

The desired low XS means that in the polymerization process a relatively low proportion of elastomeric ethylene-propylene copolymer having a low content of ethylene should be produced. Stable polymerization of such a low proportion, low ethylene content elastomeric ethylene-propylene copolymer having a low content of ethylene should be produced. The temperature for the polymerization of the rubber component should be 40 to 90°C, and more preferably 60 to 70°C. The pressure should be 500 to 3000 kPa, preferably 1000 to 2000 kPa.

The propylene content in the xylene solubles is preferably, 55 to 70 wt%, more preferably 60 to 70 wt%.

A reactor blend comprising the matrix phase and the dispersed phase obtained with such a multistage polymerization process, preferably comprising a first slurry polymerization followed by at least two gas phase polymerization, is a preferred heterophasic composition to be employed in accordance with the present invention. The process, e.g. comonomer content and MFR, are controlled in a known manner.

The heterophasic composition comprising components A) and B) preferably displays an $MFR_2$ value of from 1 to 5 g/10 min, as determined further outlined below. More preferably, the $MFR_2$ value of the heterophasic composition amounts to from 1.1 to 2 g/10 min.

Ethylene polymer C)

The polymer composition in accordance with the present invention furthermore comprises an ethylene polymer C), which preferably has a density of 0.906 to 0.930 $g/cm^3$, more preferably 0.910 to 0.925 $g/cm^3$, and more preferably 0.915 to 0.925 $g/cm^3$.

This ethylene polymer C) is selected from LDPE and LLDPE, in particular LDPE.

The ethylene polymer C) preferably has an $MFR_2$ value (determined as identified further below) of from 0.1 to 50 g/10 min, in particular of from 0.5 to 30 g/10 min, more preferably 1 to 20 g/10 min, and in embodiments also from 1 to 2 g/10 min.

The ethylene polymer C) preferably is contained in the polymer composition (based on the total weight of A) to C)) in accordance with the present invention in an amount of up to 20 wt%, preferably 5 to 15 wt% and, in particular, embodiments of from 7 to 15 wt%. The ethylene polymer C) to be contained in the polymer composition in accordance with the present invention preferably is blended mechanically with the other components, in particular the heterophasic composition using suitable and well known blending steps, such as mixing and melting steps and any combinations thereof, using conventional and well known devices.

The ethylene polymer C) preferably is blended with the heterophasic composition in the form of a powder or pellets, wherein the ethylene polymer C) may be previous compounded with additives. The obtained mixture is preferably processed by using standard polymer processing equipment, such as single- or, preferably, twin-screw extruders. The processing conditions are selected in a known manner in accordance with the properties of the components of the polymer composition in order to enable a sufficient mixing of the components without giving rise to degradation reactions due to temperatures or pressures being too high.

Polymer composition in accordance with the present invention

The polymer composition in accordance with the present invention comprising the essential components as defined above, preferably displays a tensile modulus of 900 MPa or higher. The polymer composition furthermore displays preferably haze values of less than 30%, preferably less than 20%, when determined with 1 mm thick injection molded plaques using the technique outlined further below. The polymer composition in accordance with the present invention furthermore preferably shows an $MFR_2$ value (determined as further identified below) of from 0.5 to 5, more preferably of from 1 to 2.5, and in particular of from 1.2 to 2 (g/10 min). These MFR values in particular enable the preparation of molded articles, such as bottles, by blow molding processes requiring in particular a sufficient melt strength in order to secure the desired production reliability. The polymer composition in accordance with the present invention provides such satisfactory melt strength so that the polymer composition in accordance with the present invention is in particular suitable for blow molding processes.

Additional components

The polymer composition in accordance with the present invention may, in addition to the essential components identified above, comprises further components, such as conventional additives, including antioxidants, UV stabilisers, processing aids, lubricants, pigments, reinforcing agents, fillers and nucleating agents.

Examples of suitable nucleating agents are $\alpha$-nucleating agents, such as low molecular weight components, such as phosphate derived nucleating agents, sorbitol derived nucleating agents, inorganic nucleating agents, such as talc, as well as polymeric nucleating agents, in particular polymeric nucleating agents derived from vinyl compounds. Such polymeric nucleating agents are preferred in accordance with the present invention.

Suitable low molecular weight $\alpha$-nucleating agents are e.g. sodium-2,2'-methylene-bis(4,6-d-t-bitylphenyl)phosphate (NA-11, available from Asahi Hideka Kogyo (Japan)), 1,3,2,4-d(3',4'-dimethylbenzelidine)sorbitol (Millad 3988, available from Milliken) and hydroxy bis-(2,4,8,10-tetra-tert-butyl-6-hydroxy-12H-dibenzo(di,g)(1,3,2)dioxaphosphozine-6-oxidato)aluminum (contained in a decay stab NA 21e, available from Asahi Hideka Kogyo (Japan)). Suitable amounts are 400 to 3000 ppm.

Nucleating agents may be incorporated into the polymer compositions in accordance with the present invention by any known means, including blending processes, suitably using the master batch technology, or by introducing the nucleating agent into the polymer composition already during the polymerization of one of the components.

Thus, preferably, the nucleating agent is introduced into the polymer composition of the present invention during the polymerization of the heterophasic composition, either by introducing into the polymerization reaction an already prepared polymeric nucleating agent as a separate agent or by introducing the polymeric nucleating agent, in particular a vinyl cycloalkane, in particular vinyl cyclohexane, together with the catalyst for the preparation of the heterophasic composition.

Using this technical, suitable amounts of polymeric nucleating agent in particular can be incorporated into the propylene polymer, with a very even and uniform distribution. Reference in this respect can be made to the disclosure in WO 99/24478, WO 99/224479 and WO 00/68315.

Molded articles

The composition in accordance with the present invention is in particular suitable for the preparation of molded articles, such as blow molded articles, including in particular bottles. Accordingly, the present invention, in a further embodiment, provides a bottle, displaying a top load test value of above 490 N when determined with a round bottle having a height of 270 mm, a diameter of 85 mm and a volume of 1 liter, prepared from 35 g of polymer by blow molding. Preferably, the polymer employed for preparing the bottle is a composition in accordance with the present invention. This embodiment of the present invention, however, is clearly not restricted to round bottles only, since molded articles in accordance with the present invention may also be square bottles, such as bottles having a height of 220 mm, a breadth of 80 mm and a diagonal of 100 mm, again with a volume of 1 liter, preferably again prepared from 35 g of polymer. Other bottle designs and weights, however, are also comprised by the present invention, as are furthermore other molded articles, including containers, caps, etc. Again, the present invention in this respect contemplates in particular the use of the polymer composition in accordance with the present invention for preparing such molded articles, using conventional techniques. If necessary, additional additives may be incorporated and the molded articles furthermore may be subjected to post treatments, such as surface treatments, coating treatments, treatments resulting in the application of printed text or images etc.

**Definitions and determination methods used in the claims, above description and below examples**

**The xylene soluble fraction (XS)** as defined and described in the present invention is determined as follows: 2.0 g of polymer are dissolved in 250 mm p-xylene at 135°C under agitation. After $30\pm$ minutes, the solution was allowed to cool for 15 minutes at ambient temperature and then allowed to settle for 30 minutes at $25\pm 0.5$°C. The solution was filtered with filter paper into two 100 mm flask. The solution from the first 100 mm vessel was evaporated in nitrogen flow and the residue dried under vacuum at 90°C until constant weight is reached. Xylene soluble fraction (percent) can then be determined as follows:

$$XS\% = (100 \times m_1 \times v_0)/(m_0 \times v_1),$$

wherein $m_0$ designates the initial polymer amount (grams), $m_1$ defines the weight of residue (grams), $v_0$ defines the initial volume (milliliter) and $v_1$ defines the volume of analyzed sample (milliliter).

The solution from the second 100 ml flask was treated with 200 ml of acetone under vigorous stirring. The precipitate was filtered and dried in a vacuum oven at 90°C. This solution can be employed in order to determine the amorphous part of the polymer (AM) using the following equation:

$$AM\% = (100 \times m_1 \times v_0)/(m_0 \times v_1)$$

wherein $m_0$ designates the initial polymer amount (grams), $m_1$ defines the weight of residue (grams), $v_0$ defines the initial volume (milliliter) and $v_1$ defines the volume of analyzed sample (milliliter).

**The intrinsic viscosity (IV)** value is increasing with the molecular weight of a polymer. IV of AM: measured according to ISO 1628.

**MFR$_2$:** unless otherwise specified is measured MFR$_2$ in accordance with ISO 1133 (230°C, 2.16 kg load) for polypropylene and in case of polyethylene component at 190°C with a load of 2.16 kg.

**Comonomer content** (weight percent) is determined in a known manner based on FTIR, calibrated with C13NMR.

**Melting temperature, crystallization temperature and degree of crystallinity** are measured with a Mettler TA820 differential scanning colorimetry device (DSC) on $3\pm 0.5$ mg samples. Crystallization and melting temperatures are obtained during 10°C/min cooling and heating scans between 30°C and 225°C. Melting and crystallization temperatures were taken as the peaks of endotherms and exotherms. The degree of crystallinity is calculated by comparison with the heat or fusion of a perfectly crystalline polypropylene, i.e. 209 J/g.

**Charpy notched impact** is measured according to ISO 179 (room temperature, if not otherwise mentioned) and at -20°C using injection molded test specimen as described in EN ISO 1873-2 (80 x 10 x 4 mm).

**Tensile strength, including tensile stress at yield and strain at yield,** is measured according to ISO 572-2 (cross head speed 50 mm/min). Tensile modulus is measured according to ISO 572-2 (cross head speed 1 mm/min).

**Haze and transparency** are determined from 1 mm (or 2 mm when specified) injection molded plaque samples according to ASTMD 1003.

**Toap load**, the compression test used to measure the rigidity of blow molded bottles followed the method of standard test ASTM 2659-95 in a Zwich tensile machine operated at a velocity of 10 mm/min. The bottles were either square or round as indicated in the examples. The bottles were of 1 liter size made of 35 g polymer.

Dimensions: square bottles - height 220 mm, breadth 80 mm, diagonal 100 mm round bottles - height 270 mm, diameter 85 mm

**Drop height test** was performed on bottles at 23°C and 0°C according to ASTM-D 2463-95. The height at which 50% of the bottles break in a brittle way, F50, was recorded.

Examples

The following examples illustrate the invention. The polymers were prepared as summarized in Table 1 (see also WO99/24478, ex.8) with a catalyst as described in US5234879 and using dicyclopentyl dimethoxy silane as donor. Comparative Example 3 was prepared according to WO 06/061109.

Additives: 500 ppm Irgafos 168, 500 ppm Irganox 1010, 500 ppm Ca-stearate, 1700 ppm Millad 3998

The compositions were evaluated and the results obtained are shown in Table 2.

**Table 1**

| | Ex.1 | Ex.2 | Comp. Ex.1 | Comp. Ex.2 | Comp. Ex.3 |
|---|---|---|---|---|---|
| Al/Ti (mol/mol) | 150 | 150 | 150 | 150 | 150 |
| Al/donor (mol/mol) | 10 | 10 | 10 | 10 | 10 |
| *Loop* | | | | | |
| Temperature (°C) | 80 | 80 | 70 | 80 | 80 |
| Split | 50 | 50 | 50 | 50 | 50 |
| $MFR_2$ (g/10 min) | 1,2 | 1,2 | 1,3 | 1,5 | 2,0 |
| $C_2$ (wt.%) | 0,9 | 0,8 | 4,2 | 1,3 | - |
| *GPR 1* | | | | | |
| Temperature (°C) | 80 | 80 | 80 | 80 | 80 |
| $MFR_2$ (g/10 min) | 1,3 | 1,2 | 1,3 | 1,3 | 2,0 |
| $C_2$ (wt.%) | 0,9 | 0,8 | 4,2 | 1,3 | - |
| *GPR2* | | | | | |
| Temperature (°C) | 80 | 80 | | 80 | 80 |
| $MFR_2$ (g/10 min) | 1;3 | 1,5 | | 1,4 | 2,0 |
| Total $C_2$ (wt.%) | 5,1 | 4,3 | | 5,2 | 4,3 |
| XS (%) | 12 | 11 | | 15 | 13 |
| Propylene of AM (wt. %) | 61 | 62 | | 60 | 62 |
| Intrinsic Viscosity of AM (dl/g) | 1,9 | 1,8 | | 1,9 | 1,8 |
| Polyethyelen (wt%) | 15 | 15 | - | 15 | 15 |
| Polyethylene | CA9150 | FG5190 | - | FG5190 | FG5190 |

## Table 2

| Property | Unit | Example 1 | Example 2 | Comp. Ex. 1 | Comp. Ex. 2 | Comp. Ex. 3 |
|---|---|---|---|---|---|---|
| MFR (230°C, 2.16 kg) | g/10 min | 1.7 | 2,1 | 1.6 | 2 | 2 |
| Tensile Modulus | MPa | 1050 | 1150 | 800 | 1035 | 1050 |
| Tensile Stress at yield | MPa | 24.7 | 27,4 | 24.3 | 25,4 | 25,1 |
| Strain at yield | % | 15.8 | 13 | 13.3 | 13,7 | 13,1 |
| Charpy Notched, 23°C | kJ/m$^2$ | 65 | 41,9 | 39 | 54,8 | 50 |
| Charpy Notched, -20°C | kJ/m$^2$ | 2.9 | 3,8 | 1.5 | 4,1 | 3,8 |
| Drop test 23°C square bottle 35 g | m | 2 | | 1.6 | | |
| Drop test 0°C round bottle 35 g | m | 1.2 | | 0.8 | | |
| Top Load 23°C, round bottle 35g, Force at collapse | N | 500 | | 485 | | |
| Haze, 1 mm IM plaques | % | 17 | 18 | 9 | 25 | 32 |
| Haze, 2 mm IM plaques | % | | 40 | | 51 | 65 |
| Haze bottles (0.6 mm thickness) | % | 34 | | 23 | | |

Further experiments were carried out as described for Example 1 but using different types and amounts of polyethylene (all commercially available from Borealis) as summarized in Table 3.

- LLDPE ZN, FG 5190 (MFR = 1.1; d = 919)
- LLDPE SSC, FM 5220 (MFR = 1.3; d = 922)
- LDPE ZN, CA 9150 (mfr = 15, d = 915)

## Table 3

| Example | 1 | 2 | 3 | 4 | 5 | 6 | Comp. Ex. 1 |
|---|---|---|---|---|---|---|---|
| FG 5190 (amount wt%) | | 15% | 10% | | | | |
| FM 5520 (amount wt%) | | | | | 15% | 10% | |
| CA 9150 (amount wt%) | 15% | | | 10% | | | |
| Haze 1 mm% | 17 | 25 | 24 | 20 | 26 | 26 | 9 |

The examples in accordance with the present invention clearly show the superiority of the compositions as claimed herein.

Comparative Example 1 clearly shows that a composition comprising only a random polypropylene copolymer without EPR component or polyethylene component does not provide satisfactory results. Comparative Example 2 on the other hand clearly shows that an increase of the ethylene content of the matrix component of the heterophasic composition above the upper limit as defined in claim 1 results in unfavorable haze values. Comparative Example 3 finally clearly shows that a matrix of the heterophasic composition comprising no ethylene at all also displays highly unfavorable values. Contrary thereto, the compositions in accordance with the present invention, i.e. Examples 1, 2 and 3 to 6, clearly display the unexpected superiority of the compositions in accordance with the present invention.

## Claims

1. Polymer composition comprising

A) a propylene copolymer, having a comonomer content, wherein the comonomer is selected from ethylene and α-olefins, of from more than 0 wt% to 0.95 wt%,
B) a rubber component,
C) an ethylene polymer, selected from LDPE and LLDPE

wherein components A) and B) are present in the form of a heterophasic composition comprising component A) as matrix component and component B) as dispersed phase.

2. Polymer composition in accordance with claim 1, wherein component A) has a comonomer content of from 0.25 to 0.95 wt%.

3. Polymer composition in accordance with any one of claims 1 or 2, wherein component A) comprises ethylene as any comonomer.

4. Polymer composition in accordance with any one of claims 1 to 3, wherein the rubber component B) is an elastomeric ethylene-propylene copolymer.

5. Polymer composition in accordance with any of the preceding claims, wherein component A) is present in an amount of from 55 to 85 wt%, wherein component B) is present in an amount of from 5 to 15 wt% and wherein component C) is present in an amount of from 6 to 20 wt%.

6. Polymer composition in accordance with any of the preceding claims, wherein component C) has a density of from 0.906 to 0.930 g/cm$^3$.

7. Polymer composition in accordance with any of the preceding claims, wherein component B) comprises propylene in an amount of from 50 to 70 wt%.

8. Polymer composition in accordance with any of the preceding claims, wherein component A) has an $MFR_2$ value of from 0.5 to 5 g/10 min.

9. Polymer composition in accordance with any of the preceding claims, wherein component B) shows an IV value of from 1.5 to 3 dl/g.

10. Polymer composition in accordance with any of the preceding claims, wherein component C) has an $MFR_2$ value of from 1 to 20 g/10 min.

11. Polymer composition in accordance with any of the preceding claims, showing a haze value of less than 20%, measured with 1 mm thick injection molded plaques.

12. Polymer composition in accordance with any of the preceding claims, showing a tensile modulus of 900 Mpa or higher.

13. Molded articles, formed from a polymer composition in accordance with any of preceding claims.

14. Molded article in accordance with claim 13 in the form of a bottle.

15. Molded article in accordance with any of claims 13 or 14, displaying a top load test value of above 490 N.

16. Process for preparing a polymer composition in accordance with any one of claims 1 to 12, comprising the steps of providing a hetereophasic composition comprising components A) and B) and admixing same with component C), wherein components A), B) and C) are defined as given in any of claims 1 to 12.

17. Use of a polymer composition in accordance with any one of claims 1 to 12 or obtained in accordance with claim 16 for the preparation of molded articles.

18. Bottle, displaying a top load test value of above 490N, when determined with a round bottle having a height of 270 mm, a diameter of 85 mm and a volume of 1 liter prepared from 35 g polymer by blow molding and drop height more than 0,9m and haze lower than 30% when measured on a 1 mm injection molded plaque.

**Patentansprüche**

1. Polymerzusammensetzung, umfassend

   A) ein Propylencopolymer mit einem Comonomergehalt, wobei das Comonomer ausgewählt ist aus Ethylen und α-Olefinen, von mehr als 0 Gew.-% bis 0,95 Gew.-%,
   B) eine Kautschukkomponente,
   C) ein Ethylenpolymer, ausgewählt aus LDPE und LLDPE

   wobei die Komponenten A) und B) in der Form einer heterophasischen Zusammensetzung, umfassend Komponente A) als Matrixkomponente und Komponente B) als dispergierte Phase, vorhanden sind.

2. Polymerzusammensetzung nach Anspruch 1, wobei Komponente A) einen Comonomergehalt von 0,25 bis 0,95 Gew.-% besitzt.

3. Polymerzusammensetzung nach einem der Ansprüche 1 oder 2, wobei Komponente A) Ethylen als einziges Comonomer umfasst.

4. Polymerzusammensetzung nach einem der Ansprüche 1 bis 3, wobei die Kautschukkomponente B) ein elastomeres Ethylen-Propylen-Copolymer ist.

5. Polymerzusammensetzung nach einem der vorangegangenen Ansprüche, wobei Komponente A) in einer Menge von 55 bis 85 Gew.-% vorhanden ist, wobei Komponente B) in einer Menge von 5 bis 15 Gew.-% und wobei Komponente C) in einer Menge von 6 bis 20 Gew.-% vorhanden ist.

6. Polymerzusammensetzung nach einem der vorangegangenen Ansprüche, wobei Komponente C) eine Dichte von 0,906 bis 0,930 g/cm$^3$ besitzt.

7. Polymerzusammensetzung nach einem der vorangegangenen Ansprüche, wobei Komponente B) Propylen in einer Menge von 50 bis 70 Gew.-% umfasst.

8. Polymerzusammensetzung nach einem der vorangegangenen Ansprüche, wobei Komponente A) einen MFR$_2$ Wert von 0,5 bis 5 g/10 min besitzt.

9. Polymerzusammensetzung nach einem der vorangegangenen Ansprüche, wobei Komponente B) einen IV Wert von 1,5 bis 3 dl/g zeigt.

10. Polymerzusammensetzung nach einem der vorangegangenen Ansprüche, wobei Komponente C) einen MFR$_2$ Wert von 1 bis 20 g/10 min besitzt.

11. Polymerzusammensetzung nach einem der vorangegangenen Ansprüche, welche einen Trübungswert von weniger als 20% zeigt, gemessen mit 1 mm dicken spritzgegossenen Plättchen.

12. Polymerzusammensetzung nach einem der vorangegangenen Ansprüche, welche ein Zugmodul von 900 Mpa oder höher zeigt.

13. Formgegenstände, geformt aus einer Polymerzusammensetzung nach einem der vorangegangenen Ansprüche.

14. Formgegenstand nach Anspruch 13 in der Form einer Flasche.

15. Formgegenstand nach einem der Ansprüche 13 oder 14, welcher einen Top-load-Testwert von über 490 N aufweist.

16. Verfahren zum Herstellen einer Polymerzusammensetzung nach einem der Ansprüche 1 bis 12, umfassend die Schritte des Bereitstellens einer heterophasischen Zusammensetzung, umfassend Komponenten A) und B), und Vermischen derselben mit Komponente C), wobei Komponenten A), B) und C) definiert sind wie in einem der Ansprüche 1 bis 12 angegeben.

17. Verwendung einer Polymerzusammensetzung nach einem der Ansprüche 1 bis 12 oder Erhalten nach Anspruch 16 zum Herstellen von Formgegenständen.

**18.** Flasche, welche einen Top-load-Testwert von über 490 N aufweist, wenn bestimmt mit einer runden Flasche mit einer Höhe von 270 mm, einem Durchmesser von 85 mm und einem Volumen von 1 Liter hergestellt aus 35 g Polymer durch Blasformen und Fallhöhe von mehr als 0,9 m und Trübung von weniger als 30%, wenn gemessen an einem 1 mm dicken spritzgegossenen Plättchen.


**Revendications**

**1.** Composition polymère comprenant

A) un copolymère du propène présentant un taux de comonomère compris entre plus de 0 % et 0,95 % en masse, dans laquelle le comonomère est sélectionné parmi l'éthylène et les α-oléfines,
B) un composant caoutchouteux,
C) un polymère d'éthylène, sélectionné parmi le polyéthylène basse densité, PEBD, et le polyéthylène basse densité linéaire, PEBDL,

dans laquelle les composants A) et B) sont présents sous forme d'une composition hétérophasique comprenant le composant A) comme composant matriciel et le composant B) comme phase dispersée.

**2.** Composition polymère selon la revendication 1, dans laquelle le composant A) présente un taux de comonomère compris entre 0,25 % et 0,95 % en masse.

**3.** Composition polymère selon l'une quelconque des revendications 1 ou 2, dans laquelle le composant A) comprend l'éthylène comme seul comonomère.

**4.** Composition polymère selon l'une quelconque des revendications 1 à 3, dans laquelle le composant caoutchouteux B) est un copolymère éthylène-propène élastomère.

**5.** Composition polymère selon l'une quelconque des revendications précédentes, dans laquelle le composant A) est présent à raison de 55 % à 85 % en masse, dans laquelle le composant B) est présent à raison de 5 % à 15 % en masse, et dans laquelle le composant C) est présent à raison de 6 % à 20 % en masse.

**6.** Composition polymère selon l'une quelconque des revendications précédentes, dans laquelle le composant C) présente une densité comprise entre 0,906 g/cm$^3$ et 0,930 g/cm$^3$.

**7.** Composition polymère selon l'une quelconque des revendications précédentes, dans laquelle le composant B) comprend du propène à raison de 50 % à 70 % en masse.

**8.** Composition polymère selon l'une quelconque des revendications précédentes, dans laquelle le composant A) présente une valeur MFR$_2$ comprise entre 0,5 g/10 min et 5 g/10 min.

**9.** Composition polymère selon l'une quelconque des revendications précédentes, dans laquelle le composant B) présente une valeur IV comprise entre 1,5 dl/g et 3 dl/g.

**10.** Composition polymère selon l'une quelconque des revendications précédentes, dans laquelle le composant C) présente une valeur MFR$_2$ comprise entre 1 g/10 min et 20 g/10 min.

**11.** Composition polymère selon l'une quelconque des revendications précédentes, présentant une valeur de turbidité inférieure à 20 % lorsqu'elle est mesurée sur des plaques moulées par injection de 1 mm d'épaisseur.

**12.** Composition polymère selon l'une quelconque des revendications précédentes, présentant un module d'élasticité supérieur ou égal à 900 Mpa.

**13.** Article moulé formé à partir d'une composition polymère selon l'une quelconque des revendications précédentes.

**14.** Article moulé selon la revendication 13 en forme de bouteille.

**15.** Article moulé selon l'une quelconque des revendications 13 et 14, présentant une valeur d'essai de charge de compression supérieure à 490 N.

**16.** Processus de préparation d'une composition polymère selon l'une quelconque des revendications 1 à 12, comprenant les étapes de préparation d'une composition hétérophasique comprenant les composants A) et B), et de mélange de ceux-ci en les ajoutant au composant C), dans lequel les composants A), B) et C) sont définis conformément à l'une quelconque des revendications 1 à 12.

**17.** Utilisation d'une composition polymère selon l'une quelconque des revendications 1 à 12 ou obtenue conformément à la revendication 16, pour la préparation d'articles moulés.

**18.** Bouteille présentant une valeur d'essai de charge de compression supérieure à 490 N, déterminée pour une bouteille ronde présentant une hauteur de 270 mm, un diamètre de 85 mm et un volume de 1 litre et préparée à partir de 35 g de polymère moulé par soufflage, avec une hauteur de chute supérieure à 0,9 m, et une turbidité inférieure à 30 % lorsqu'elle est mesurée sur une plaque moulée par injection de 1 mm.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 03106553 A1
- EP 0373660 A2
- EP 06037238 A2
- US 3517086 A
- US 3998911 A
- GB 1156813 A
- WO 0244272 A1
- EP 0557953 A1
- US 5234879 A
- WO 9219653 A
- WO 9219658 A
- WO 9933843 A
- EP 0887379 A1
- WO 9212182 A
- WO 9924478 A
- WO 99224479 A
- WO 0068315 A
- WO 06061109 A

**Non-patent literature cited in the description**

- Encyclopedia of Polymer Science and Engineering. vol. 6, 545-558